# DEMANDE DE BREVET EUROPEEN

(11) **EP 1 568 908 A1**
(43) Date de publication de la demande: **31.08.2005**
(21) Numéro de dépôt: 05300130.1
(22) Date de dépôt: 18.02.2005
(51) Int. Cl.: F16D 48/06, B60Q 1/44, B60T 17/22, B60K 35/00

(54) **Procédé et dispositif d'aide à la conduite d'un véhicule automobile**

(30) Priorité: 24.02.2004 FR 0401829
(71) Demandeur: Renault s.a.s., 92100 Boulogne Billancourt (FR)
(72) Inventeur: Pacary, Jean-Christophe, 78180 Montigny le Bretonneux (FR); Rousseau, Marc, 91530 Saint Maurice Montcouronne (FR)

(57) **Abrégé**

Le véhicule automobile comprend un moteur à combustion interne, un mécanisme d'embrayage automatique, une boîte de vitesses, une pédale d'accélérateur et au moins un organe de freinage. On détecte ( blocs A à E) l'imminence d'une surchauffe dudit mécanisme d'embrayage automatique en phase de patinage de celui-ci alors que le véhicule est immobilisé sur une voie de circulation en pente montante. Suivant l'invention, en réponse à une telle détection, on active ( blocs F ou G) l'émission d'un ordre de conduite (PSF) adressé au conducteur dudit véhicule, propre à inciter celui-ci à cesser d'actionner la pédale d'accélérateur et à actionner plutôt l'organe de freinage.

## Description

La présente invention est relative à un procédé d'aide à la conduite d'un véhicule automobile comprenant un moteur à combustion interne, un mécanisme d'embrayage automatique, une boîte de vitesses, une pédale d'accélérateur et au moins un organe de freinage et, plus particulièrement, à un tel procédé suivant lequel on détecte l'imminence d'une surchauffe du mécanisme d'embrayage automatique afin de prévenir une dégradation de celui-ci.

Lorsque le conducteur d'un tel véhicule doit s'arrêter, moteur tournant, sur une voie de circulation montante, il peut immobiliser le véhicule après l'arrêt en actionnant un frein à main ou à pied. En particulier si la pente est modérée, il peut aussi arrêter le véhicule en relevant son pied de la pédale d'accélérateur jusqu'à ce que le couple transmis aux roues motrices du véhicule soit juste suffisant pour équilibrer les forces de gravité agissant sur le véhicule et qui pourraient autrement faire reculer celui-ci. Cela implique un patinage des garnitures en matériau de friction du mécanisme d'embrayage et donc un échauffement de ces garnitures, préjudiciable à leur bon fonctionnement et à leur durée de vie utile.

Du fait de l'absence d'une pédale d'embrayage dans un véhicule à mécanisme d'embrayage automatique, le conducteur n'est alors pas conscient de l'existence de ce patinage et donc du risque d'échauffement excessif des garnitures si ce patinage se prolonge.

Pour prévenir le conducteur de ce risque quand la pédale d'accélérateur est maintenue trop longtemps en pression par son pied dans la situation évoquée ci-dessus, on propose dans le document GB-A -2 327 248 d'activer alors des moyens permettant de transmettre aux roues du véhicule un couple variable, en amplitude et/ou en fréquence par exemple, propre à ballotter le véhicule et donc à alerter le conducteur sur l'apparition d'un état de fonctionnement anormal de celui-ci.

Cette solution ne permet pas d'identifier clairement le risque encouru et, surtout, le moyen de le supprimer.

La présente invention a précisément pour but de fournir un procédé et un dispositif d'aide à la conduite d'un véhicule automobile dans la situation envisagée ci-dessus , qui ne présentent pas cet inconvénient.

On atteint ce but de l'invention, ainsi que d'autres qui apparaîtront à la lecture de la description qui va suivre, avec un procédé d'aide à la conduite d'un véhicule automobile du type décrit en préambule de la présente description, suivant lequel on détecte l'imminence d'une surchauffe du mécanisme d'embrayage automatique en phase de patinage de celui-ci alors que le véhicule est immobilisé sur une voie de circulation en pente montante. Suivant l'invention, en réponse à une telle détection, on active l'émission d'un ordre de conduite adressé au conducteur dudit véhicule, propre à inciter celui-ci à cesser d'actionner la pédale d'accélérateur et à actionner plutôt un organe de freinage du véhicule.

Suivant un mode de mise en oeuvre préféré du procédé selon la présente invention, cet organe de freinage est une pédale de frein. Pour actionner cette pédale, le conducteur est obligé de cesser d'actionner la pédale d'accélérateur ce qui supprime du même coup le patinage du mécanisme d'embrayage à l'origine de la surchauffe détectée. Le véhicule n'en reste pas moins immobilisé grâce à l'action de la pédale de frein. Il est ainsi mis fin à la situation dangereuse détectée sans même que le conducteur n'ait eu à s'en rendre compte.

Selon d'autres caractéristiques , optionnelles, de la présente invention :
- l'ordre de conduite est porté par un signal d'alerte visuel et/ou sonore,
- le signal d'alerte comporte un message textuel,
- l'émission de l'ordre de conduite est subordonnée à la satisfaction d'au moins les conditions du groupe formé par : vitesse du véhicule nulle, enfoncement de la pédale d'accélérateur supérieur à un seuil prédéterminé, engagement d'un rapport dans la boîte de vitesses,
- ledit groupe de conditions comprend en outre la croissance de la température du mécanisme d'embrayage automatique et la vérification du desserrage d'un frein à main,
- on émet le signal d'alerte quand, en outre, ladite température dépasse un premier seuil,
- si le signal d'alerte reste ignoré par le conducteur, on active un deuxième signal d'alerte renforcé par rapport au premier,
- le deuxième signal est à la fois visuel et sonore,
- le deuxième signal d'alerte clignote à la fréquence de sa partie sonore,
- on émet le deuxième signal d'alerte quand ladite température vient à dépasser un deuxième seuil supérieur au premier,
- on coupe l'émission d'un signal d'alerte quand survient l'une quelconque des conditions du groupe formé par : pédale de frein actionnée, frein à main serré, décollage du véhicule.

Pour la mise en oeuvre de ce procédé, l'invention fournit un dispositif comprenant a) des moyens pour détecter l'imminence d'une surchauffe du mécanisme d'embrayage automatique en phase de patinage de celui-ci alors que le véhicule est immobilisé sur une voie de circulation en pente montante et b) des moyens d'émission, à la suite d'une telle détection, d'un ordre de conduite incitant le conducteur du véhicule à cesser d'actionner ladite pédale d'accélérateur et à actionner plutôt l'organe de freinage.

D'autres caractéristiques et avantages de la présente invention apparaîtront à la lecture de la description qui va suivre et à l'examen du dessin annexé dans lequel :
- la figure 1 représente l'organigramme d'un mode de mise en oeuvre préféré du procédé d'aide à la conduite suivant la présente invention, et
- la figure 2 représente schématiquement un dispositif pour la mise en oeuvre du procédé suivant l'organigramme de la figure 1.

A titre illustratif et non limitatif ,on va maintenant décrire un mode de mise en oeuvre de la présente invention dans son application à un véhicule automobile du type décrit ci-dessus, la boîte de vitesses étant en outre robotisée. On sait que dans un véhicule ainsi équipé, les phases d'embrayage et de débrayage ainsi que la sélection et l'engagement des vitesses sont automatisés.

Il s'agit donc, dans un premier temps, de détecter l'imminence d'une surchauffe des garnitures de friction du mécanisme d'embrayage automatique, situation que l'on rencontre notamment quand le conducteur du véhicule fait patiner l'embrayage pendant un temps exagérément long, sans en avoir conscience comme on l'a vu plus haut, pour maintenir son véhicule à l'arrêt sur une voie en pente montante.

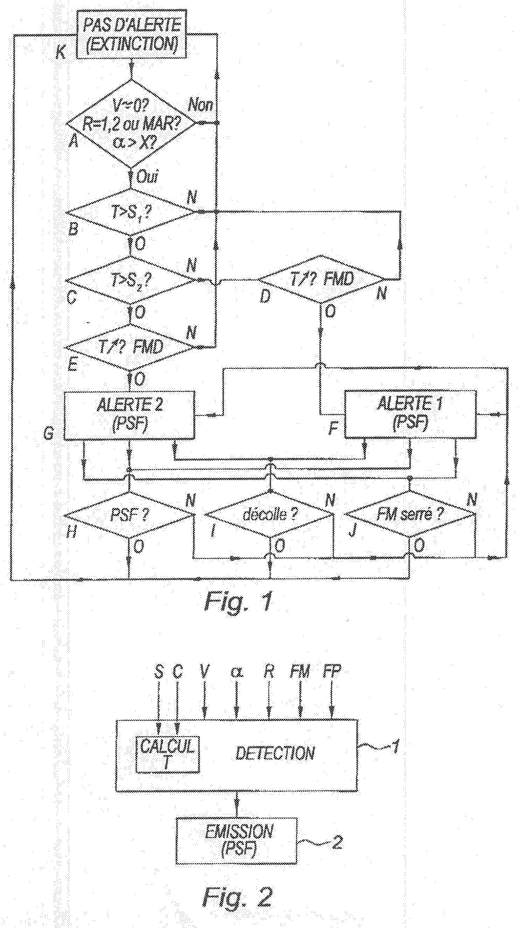

Pour procéder à cette détection, on exécute un certain nombre de tests illustrés par les blocs detests A à E de l'organigramme de la figure 1. C'est ainsi que (bloc A) l'on examine tout d'abord la vitesse V du véhicule et le taux d'enfoncement α de la pédale d'accélérateur. On examine encore l'état de la boîte de vitesses pour déterminer si un rapport de boîte R est engagé et lequel. Si la vitesse V est sensiblement nulle et que l'enfoncement α est supérieur à un seuil X dûment calibré, on peut en déduire que le conducteur maintient son véhicule à l'arrêt sur une voie en pente à l'aide de la pédale d'accélérateur. La stratégie d'aide à la conduite du véhicule suivant l'invention peut alors se poursuivre dans la mesure où il se vérifie aussi que le véhicule est alors dans une phase analogue à une phase de décollage. Pour cela le rapport de vitesse engagé dans la boîte de vitesses doit être le premier ou le deuxième rapport ou encore celui correspondant à la marche arrière, soit R= 1,2 ou MAR (marche arrière).

Cette stratégie d'aide à la conduite implique que l'on puisse mesurer ou évaluer la température atteinte par les garnitures de friction du mécanisme d'embrayage automatique. On peut substituer avantageusement à une mesure physique de cette température une évaluation par le calcul de celle-ci, selon l'une quelconque des méthodes connues à cet effet . C'est ainsi qu'on propose dans le document GB-2 327 248 précité de calculer cette température à partir d'une détermination de la quantité d'énergie développée dans les garnitures de friction de l'embrayage, quantité elle-même déduite du taux de glissement de ces garnitures et du couple transmis par le mécanisme d'embrayage.

La température atteinte par les garnitures du mécanisme d'embrayage étant ainsi surveillée, on compare celle-ci à une premier seuil de température S₁ prédéterminé, correspondant à une surchauffe imminente du mécanisme d'embrayage (bloc B). Si ce premier seuil est dépassé sans que soit franchi un deuxième seuil S₂ supérieur à S₁ (bloc C), on déclenche l'émission d'un premier signal d'alerte (ALERTE 1, bloc F).

Préférentiellement, avant d'émettre ce signal, on vérifie encore (bloc D) que la température T des garnitures est toujours en croissance (T↑) et que le conducteur n'a pas actionné le frein à main du véhicule (FMD ?= Frein à Main Desserré ?) ceci afin d'éviter une mise en alerte devenue inutile du conducteur. (note pour l'inventeur : à confirmer ou à corriger si besoin est)

Suivant une caractéristique de la présente invention, le signal d'alerte émis porte un ordre de conduite PSF adressé au conducteur du véhicule et propre à inciter celui-ci à cesser d'actionner la pédale d'accélérateur, action qui, dans la situation du véhicule évoquée ci-dessus, est à l'origine du patinage et de la surchauffe du mécanisme d'embrayage.

Avantageusement, cet ordre est un message textuel, visuel et/ou vocal, demandant au conducteur de poser son pied sur la pédale de frein (message PSF= Pied Sur Frein). Pour exécuter cet ordre, le conducteur est obligé de cesser d'enfoncer la pédale d'accélérateur, et donc de faire patiner l'embrayage, ce qui supprime la cause de l'échauffement de celui-ci. Le véhicule n'en reste pas moins immobilisé par l'enfoncement de la pédale de frein.

Ce message peut être affiché en toutes lettres sur le tableau de bord du véhicule ou bien au moyen d'un pictogramme, de manière à être facilement et immédiatement perçu par le conducteur. Il peut aussi, ou complémentairement, prendre la forme d'un message sonore émis par des moyens de synthèse vocale, par exemple.

Dans le cas ou, malgré toutes ces précautions, le message resterait ignoré du conducteur, la température des garnitures continue à croître et vient alors à dépasser le seuil S₂, ce qui est détecté à l'étape du procédé suivant l'invention illustrée par le bloc C.

Suivant ce procédé, on émet alors un deuxième signal d'alerte (ALERTE 2, bloc G) après avoir vérifié que la température surveillée est toujours en croissance et que le frein à main du véhicule est toujours desserré (bloc E), comme pour le premier signal d'alerte. Ce deuxième signal est renforcé par rapport au premier de manière à attirer assurément l'attention du conducteur. Pour ce faire il peut comporter préférentiellement à la fois une partie visuelle et une partie sonore, textuelle ou non. C'est ainsi que la partie visuelle pourrait être constituer par un pictogramme clignotant à la fréquence d'excitation d'une sonnette, par exemple.

Une réaction du conducteur à l'un ou l'autre des signaux d'alerte émis provoque évidemment l'extinction de ceux -ci. C'est ainsi que la détection de la pose du pied du conducteur sur la pédale de frein (bloc H) provoque cette extinction (bloc K).

Il en est de même en cas de détection d'un décollage du véhicule (bloc I) ou de serrage du frein à main par le conducteur (bloc J), celui-ci relevant alors instinctivement son pied de la pédale d'accélérateur.

Il apparaît maintenant que la présente invention permet bien d'atteindre le but annoncé, à savoir obtenir assurément et au plus vite du conducteur du véhicule une réaction propre à éviter la surchauffe du mécanisme d'embrayage automatique évoquée en préambule de la présente description.

On se réfère maintenant à la figure 2 du dessin annexé qui représente schématiquement un dispositif pour la mise en oeuvre du procédé suivant l'invention. Celui-ci comprend essentiellement des moyens de détection 1 de imminence d'une surchauffe du mécanisme d'embrayage automatique et des moyens d'émission 2 des messages d'alerte évoqués ci-dessus.

Les moyens de détection sont avantageusement constitués par des moyens logiciels dûment programmés pour calculer une estimation de la température courante T des garnitures du mécanisme d'embrayage et pour exécuter les opérations détaillées dans l'organigramme de la figure 1.

Pour calculer cette température estimée, ces moyens logiciels peuvent recevoir, comme on l'a vu plus haut, des données relatives au taux de glissement S des garnitures d'une part, et au couple C transmis par le mécanisme d'embrayage.

Pour exécuter le programme illustré par l'organigramme de la figure 1, ces moyens logiciels doivent en outre recevoir des données représentatives de la vitesse V du véhicule, du taux d'enfoncement α de la pédale d'embrayage, du rapport R engagé dans la boîte de vitesses, de l'état FM du frein à main (serré ou non) et de l'état FP du frein à pied (serré ou non).

On appréciera que l'information concernant le rapport R est immédiatement disponible dans un véhicule équipé d'une boîte de vitesses robotisée. C'est d'ailleurs dans le calculateur de gestion d'une telle boîte que peuvent être commodément implantés les moyens logiciels évoqués ci-dessus. Ils pourraient aussi être implantés dans tout autre calculateur installé dans le véhicule, en particulier quand celui-ci est équipé d'un réseau local de communications du type CAN ou VAN, par exemple.

L'invention n'est cependant pas limitée à son application à un véhicule muni d'une boîte de vitesses robotisée. Elle peut également trouver application dans un véhicule à boîte de vitesses manuelle et, plus généralement , dans tout véhicule équipé d'un mécanisme d'embrayage automatique, ou « piloté ».

De même l'invention n'est pas limitée à un procédé commandant l'émission d'un message réclamant l'activation de la pédale de frein. Le message pourrait également réclamer le serrage du frein à main puisque, comme on l'a déjà noté plus haut, un tel serrage s'accompagne d'un levé de pied réflexe qui libère la pédale d'accélérateur.

De même encore on pourrait détecter l'imminence d'une surchauffe du mécanisme d'embrayage en surveillant l'évolution d'une grandeur autre que la température des garnitures de celui-ci, par exemple l'énergie de friction développée dans ces garnitures.

## Revendications

1. Procédé d'aide à la conduite d'un véhicule automobile, ledit véhicule comprenant un moteur à combustion interne, un mécanisme d'embrayage automatique, une boîte de vitesses, une pédale d'accélérateur et au moins un organe de freinage, procédé suivant lequel on détecte l'imminence d'une surchauffe dudit mécanisme d'embrayage automatique en phase de patinage de celui-ci alors que le véhicule est immobilisé sur une voie de circulation en pente montante,
**caractérisé en ce que**, en réponse à une telle détection, on active l'émission d'un ordre de conduite (PSF) adressé au conducteur dudit véhicule, propre à inciter celui-ci à cesser d'actionner ladite pédale d'accélérateur et à actionner plutôt ledit organe de freinage.

2. Procédé conforme à la revendication 1, **caractérisé en ce que** ledit organe de freinage est une pédale de frein.

3. Procédé conforme à l'une quelconque des revendications 1 et 2, **caractérisé en ce que** ledit ordre de conduite est porté par un signal d'alerte visuel et/ou sonore.

4. Procédé conforme à la revendication 3, **caractérisé en ce que** ledit signal d'alerte comporte un message textuel.

5. Procédé conforme à l'une quelconque des revendications précédentes, **caractérisé en ce que** l'émission dudit ordre de conduite est subordonnée à la satisfaction d'au moins les conditions du groupe formé par : vitesse (V) du véhicule nulle, enfoncement (α) de la pédale d'accélérateur supérieur à un seuil (X) prédéterminé, engagement d'un rapport (R) dans la boîte de vitesses.

6. Procédé conforme à la revendication 5, **caractérisé en ce que** ledit groupe de conditions comprend en outre la croissance de la température (T) dudit mécanisme d'embrayage automatique et la vérification du desserrage d'un frein à main.

7. Procédé conforme à l'une quelconque des revendications 3 à 6, **caractérisé en ce qu'**on émet ledit signal d'alerte quand, en outre, ladite température (T) dépasse un premier seuil (S₁).

8. Procédé conforme à l'une quelconque des revendications 3 à 7, **caractérisé en ce que** si ledit signal d'alerte reste ignoré par ledit conducteur, on active un deuxième signal d'alerte renforcé par rapport au premier.

9. Procédé conforme à la revendication 8, **caractérisé en ce que** ledit deuxième signal est à la fois visuel et sonore.

10. Procédé conforme à la revendication 9, **caractérisé en ce que** la partie visuelle dudit deuxième signal d'alerte clignote à la fréquence d'excitation de sa partie sonore.

11. Procédé conforme à l'une quelconque des revendications 8 à 10, **caractérisé en ce qu'**on émet ledit deuxième signal d'alerte quand ladite température (T) vient à dépasser un deuxième seuil (S₂) supérieur au premier (S₁).

12. Procédé conforme à l'une quelconque des revendications 3 à 11, **caractérisé en ce qu'**on coupe l'émission d'un signal d'alerte quand survient l'une quelconque des conditions du groupe formé par : pédale de frein actionnée, frein à main serré, décollage du véhicule.

13. Dispositif pour la mise en oeuvre du procédé conforme à l'une quelconque des revendications précédentes, **caractérisé en ce qu'**il comprend a) des moyens (1) pour détecter l'imminence d'une surchauffe dudit mécanisme d'embrayage automatique en phase de patinage de celui-ci alors que ledit véhicule est immobilisé sur une voie de circulation en pente montante et b) des moyens (2) d'émission, à la suite d'une telle détection, d'un ordre de conduite (PSF) incitant le conducteur dudit véhicule à cesser d'actionner ladite pédale d'accélérateur et à actionner plutôt ledit organe de freinage.

14. Dispositif conforme à la revendication 13, **caractérisé en ce que** lesdits moyens d'émission forment au moins un message textuel et/ou vocal énonçant ledit ordre de conduite.

15. Dispositif conforme à la revendication 13, **caractérisé en ce que** lesdits moyens d'émission forment au moins un pictogramme signifiant ledit ordre de conduite (PSF).
